**Europäisches Patentamt**

**European Patent Office**

**Office européen des brevets**

(19)

(11) Numéro de publication: **0 053 053**
**B1**

(12)
# FASCICULE DE BREVET EUROPEEN

(45) Date de publication du fascicule du brevet:
**22.05.85**

(51) Int. Cl.⁴: **B 60 J 3/02**

(21) Numéro de dépôt: **81401680.4**

(22) Date de dépôt: **23.10.81**

(54) **Pare-soleil, notamment pour véhicule automobile.**

(30) Priorité: **26.11.80 FR 8025052**

(43) Date de publication de la demande:
**02.06.82 Bulletin 82/22**

(45) Mention de la délivrance du brevet:
**22.05.85 Bulletin 85/21**

(84) Etats contractants désignés:
**DE GB IT SE**

(56) Documents cités:
**FR - A - 2 054 798**
**US - A - 3 199 913**
**US - A - 3 343 867**
**US - A - 3 610 680**

(73) Titulaire: **COMPAGNIE INDUSTRIELLE DE MECANISMES en abrégé C.I.M. Société dite:, 6, Rue Barbès, F-92302 Levallois-Perret (FR)**

(72) Inventeur: **Canadas, Jean-Christophe, 28 Rue des Etats-Unis, 88200 Remiremont (FR)**
Inventeur: **Vigo, Gilles, 43 Avenue de Verdun, 88160 Le Thillot (FR)**

(74) Mandataire: **Lavoix, Jean et al, c/o Cabinet Lavoix 2, Place D'Estienne D'Orves, F-75441 Paris Cedex 09 (FR)**

## Description

La présente invention a pour objet un pare-soleil galbé, notamment pour véhicule automobile.

Afin de permettre aux pare-soleil d'épouser la forme du pavillon du véhicule, on a déjà prévu de leur donner une forme galbée au voisinage de leurs extrémités proches de la partie latérale du pavillon. Dans la technique connue, cette conformation particulière implique des opérations longues et onéreuses, à savoir: mise en forme des armatures en fils métalliques, réalisation d'électrodes de soudure galbées pour effectuer la soudure périphérique du matériau de revêtement, difficulté et perte de temps lors de la mise en place des différents composants pour réaliser cette soudure. De plus, pour éviter que le revêtement du pare-soleil ne forme des plis dans la zone concave de la partie galbée, il est nécessaire de réaliser un préformage de ce revêtement ou bien un passage à la chaleur après soudure, ce qui complique encore les opérations de fabrication et augmente les coûts.

L'invention concerne donc plus précisément, les pare-soleil du type comprenant une armature, un matériau de revêtement, des moyens d'articulation sur le pavillon du véhicule, et une partie d'extrémité galbée destinée à épouser la forme du pavillon, dans lequel le galbe est obtenu au moyen d'au moins une ligne de pliage divisant le pare-soleil en une partie principale et une partie d'extrémité pouvant être orientée obliquement par rapport à la partie principale, l'armature s'arrêtant au voisinage de la ligne de pliage.

Un tel pare-soleil est décrit dans le document US-A-3 610 680. Cependant, l'extrémité pliable du pare-soleil ainsi réalisée ne présente pas une tenue et un aspect extérieur réellement satisfaisants, la fabrication de ce pare-soleil étant en outre relativement compliquée et onéreuse.

Il est également connu d'assembler par soudure l'une à l'autre le long de la ligne de pliage, au moins en certains emplacements de celle-ci, deux feuilles de revêtement recouvrant les faces opposées du pare-soleil.

L'invention a donc pour but de réaliser un pare-soleil galbé dont la partie pliable présente une meilleure tenue et un aspect extérieur plus satisfaisant, et qui de plus puisse être fabriqué de façon plus simple, plus fiable et moins onéreuse que les pare-soleil antérieurs.

Conformément à l'invention, le pare-soleil comporte un organe raidisseur disposé dans la zone de la ligne de pliage, et qui présente des évidements le long de la ligne de pliage, les feuilles de revêtement recouvrant les deux faces étant assemblées par soudure l'une à l'autre au niveau desdits évidements.

Cet organe raidisseur, qui peut être par exemple réalisé sous la forme d'une plaquette d'épaisseur convenable, comporte le long de la ligne de pliage des évidements permettant l'assemblage par soudure entre les deux feuilles de revêtement.

L'invention sera décrite ci-après plus en détail en se référant aux dessins annexés qui en illustrent plusieurs formes de réalisation non limitatives:

la Figure 1 est une vue en plan d'un pare-soleil suivant l'invention;

la Figure 2 est une vue en coupe suivant la ligne II–II de la Figure 1;

la Figure 3 est une vue en plan d'un organe raidisseur incorporé au pare-soleil;

les Figures 4 et 5 sont des vues analogues à la Figure 2 représentant deux variantes de réalisation.

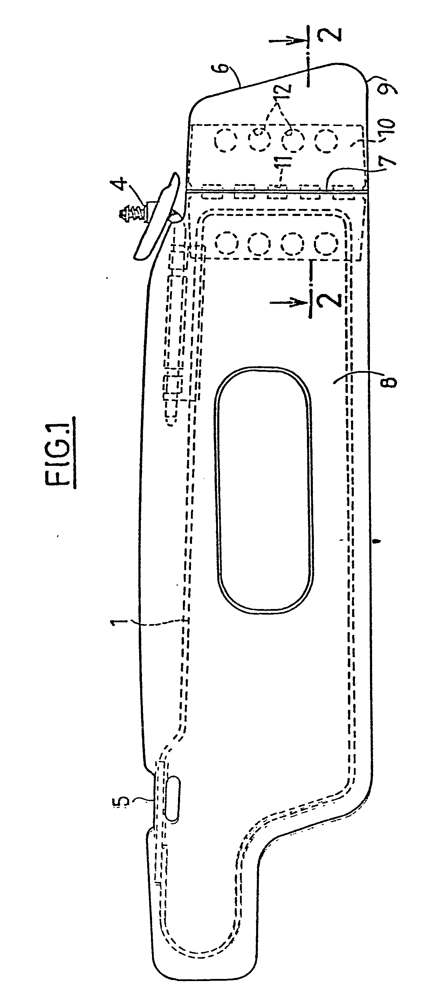

Le pare-soleil représenté aux Fig. 1 à 3 comporte une armature 1 en fil métallique, un matériau de garnissage 2 et un revêtement 3 recouvrant respectivement les deux faces 3a et 3b du pare-soleil. Ce dernier comporte de façon classique des moyens d'articulation 4 et d'encliquetage 5 permettant de le bloquer par rapport au pavillon du véhicule.

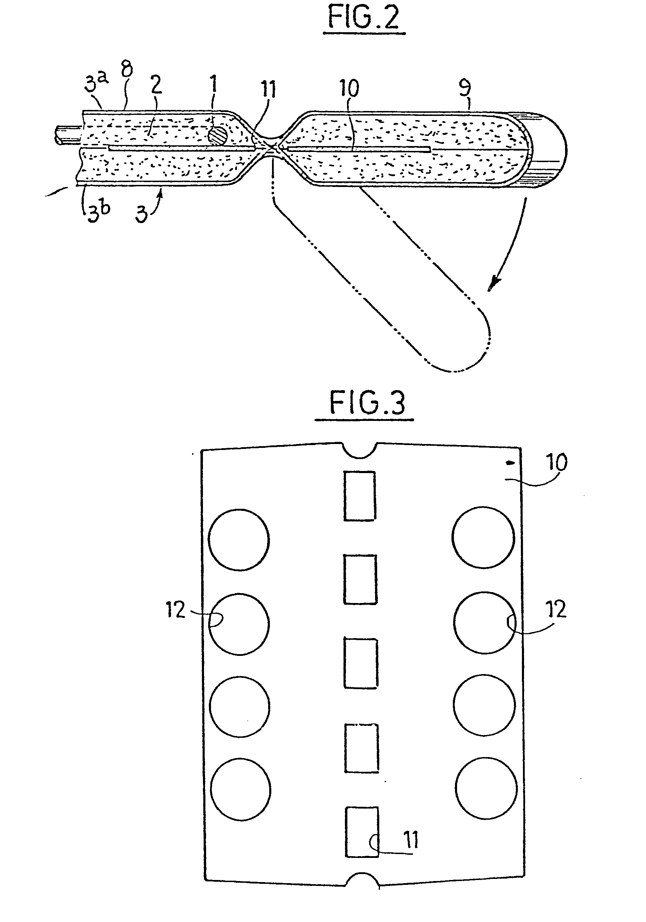

L'armature en fil métallique est interrompue à une certaine distance du bord 6 du pare-soleil le plus proche de la partie latérale du pavillon et il est prévu une ligne de pliage 7 s'étendant à peu près transversalement par rapport à la direction longitudinale du pare-soleil et séparant ce dernier en une partie principale 8 et une partie d'extrémité 9. Le long de cette ligne de pliage, les deux feuilles de revêtement 3a, 3b sont soudées l'une sur l'autre, de façon continue ou discontinue, au travers du matériau de garnissage. On réalise ainsi le long de la ligne de pliage un affaiblissement du pare-soleil de la partie d'extrémité 9 peut alors être pliée et orientée de façon à épouser la forme du pavillon dans cette zone (Fig. 2).

Pour donner à cette extrémité une meilleure tenue, on place à l'intérieur du matériau de garnissage un organe raidisseur qui peut par exemple être réalisé en polyamide et qui peut avoir la forme représentée au dessin. Cet organe raidisseur est ici constitué par une plaquette 10 ayant une épaisseur d'environ 0,8 mm et comportant le long de la ligne de pliage des évidements 11 permettant l'assemblage par soudure entre les deux feuilles de revêtement 3a, 3b. Afin d'améliorer l'ancrage dans le matériau de garnissage, l'organe raidisseur comporte de part et d'autre des évidements 11 une série d'orifices 12.

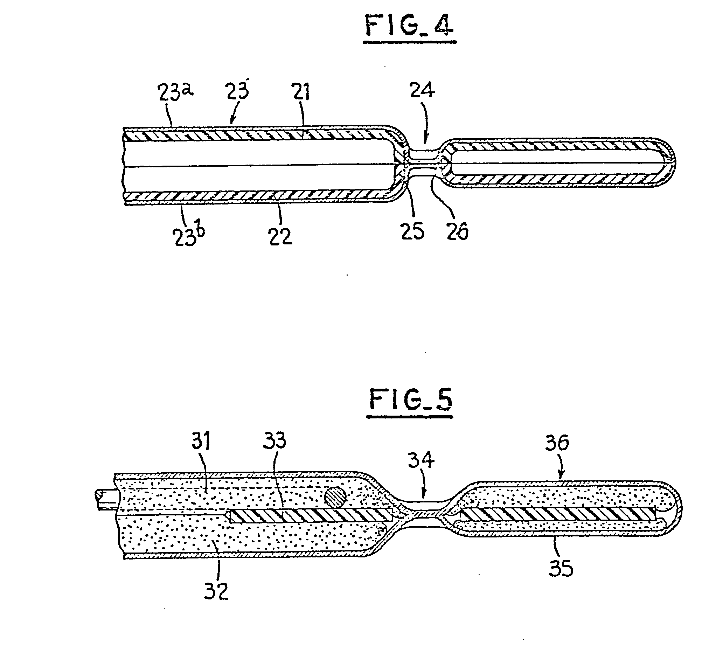

Dans le mode de réalisation représenté à la Fig. 4, l'invention est appliqué à un pare-soleil du type décrit dans la demande de brevet français No 2 491 402 publiée le 9/4/82. Ce pare-soleil comporte deux demi-coquilles creuses, 21, 22 réalisées en une matière plastique convenable, par exemple en polypropylène qui sont accolées le long d'un plan de joint. Ces deux demi-coquilles sont recouvertes d'un revêtement 23 recouvrant les deux faces 23a, 23b du pare-soleil. Afin d'obtenir le même résultat que dans le premier mode de réalisation, les deux demi-coquilles délimitent le long d'une ligne de pliage 24 une zone 25 d'épaisseur réduite dans laquelle sont par ailleurs prévus des orifices 26. Les deux feuilles de revêtement 23a, 23b sont assemblées par soudure au niveau de ces orifices.

Dans le mode de réalisation de la Fig. 5, le pare-soleil comporte un garnissage 31 formé de deux couches de mousse 31, 32 d'épaisseur identique, contre lesquelles est collé un organe raidisseur 33, disposé dans la zone de la ligne de pliage 34.

La couche 31 s'étend jusqu'à l'extrémité du pare-soleil, tandis que la couche 32 est interrompue au niveau de la ligne de pliage. De l'autre côté de cette ligne est prévue une couche de mousse 35 d'épaisseur plus faible, ce qui donne à la partie pliable 36 une épaisseur également réduite. D'une façon générale cette partie repliable peut donc avoir une épaisseur différente de celle de la partie principale du pare-soleil.

Dans les divers modes de réalisation prévus, l'invention permet bien de résoudre le problème posé. En effet, le procédé de fabrication demeure très simple et ne nécessite pas d'outillage particulier; le revêtement est parfaitement maintenu en place, même dans la partie concave du pare-soleil, étant donné la liaison par soudure avec la feuille de revêtement disposée sur la face opposée du pare-soleil; la déformation de la partie d'extrémité du pare-soleil est choisie à volonté par l'utilisateur puisque aucune armature métallique rigide ne se trouve dans la zone de la ligne de pliage.

De plus, l'opération de soudure le long de la ligne de pliage peut être effectuée aisément en même temps que la soudure habituelle du matériau de revêtement et alors que le pare-soleil est disposé à plat, la forme galbée n'étant donnée qu'ultérieurement.

Enfin, on peut noter que la ligne de soudure peut être continue ou discontinue et effectuée avec des points de forme appropriée, suivant l'effet recherché.

## Revendications

1. Pare-soleil galbé, notamment pour véhicule automobile, comprenant une armature (1; 21, 22), un matériau de revêtement en feuille (3; 23) recouvrant les deux faces, des moyens (4) d'articulation sur le pavillon d'un véhicule, et une partie d'extrémité galbée (9) destinée à épouser la forme du pavillon, dans lequel le galbe est obtenu au moyen d'au moins une ligne de pliage (7; 24) divisant le pare-soleil en une partie principale (8) et une partie d'extrémité (9) pouvant être orientée obliquement par rapport à la partie principale, l'armature (1; 21, 22) étant limitée à la partie principale (8) et s'arrêtant au voisinage de la ligne de pliage (7, 24), caractérisé en ce qu'il comporte un organe raidisseur (10) disposé dans la zone de la ligne de pliage, et qui présente des évidements (11) le long de la ligne de pliage, les feuilles de revêtement (3a, 3b; 23a, 23b) recouvrant les deux faces étant assemblées par soudure l'une à l'autre au niveau desdits évidements (11).

2. Pare-soleil suivant la revendication 1, comprenant deux demi-coquilles (21, 22) accolées, caractérisé en ce que les deux demi-coquilles comportent le long de la ligne de pliage (24) une zone (25) d'épaisseur réduite.

3. Pare-soleil suivant la revendication 2, caractérisé en ce que les demi-coquilles (21, 22) comportent des évidements ou orifices (26) dans la zone (25) d'épaisseur réduite.

4. Pare-soleil suivant l'une quelconque des revendications 1 à 3, caractérisé en ce que la partie d'extrémité (36) a une épaisseur différente de celle de la partie principale.

## Claims

1. Curved sun-glare shield, in particular for a motor vehicle, comprising a frame (1; 21, 22) a sheet of covering material (3; 23) covering the two sides, means (4) for pivotally mouting the shield on the roof of a vehicle, and a curved end part (9) adapted to conform to the shape of the roof, in which the curve is obtained by means of at least one fold line (7; 24) which divides the sun-glare shield into a main part (8) and an end part (9) capable of being oriented obliquely relative to the main part, the frame (1; 21, 22) being limited to the main part (8) and stopping in the vicinity of the fold line (7; 24), characterised in that it comprises stiffening means (10) disposed in the region of the fold line and including openings (11) along the fold line, the covering sheets (3a, 3b, 23a, 23b) covering the two sides being welded together in the region of said openings (11).

2. A sun-glare shield according to claim 1, comprising two assembled semi-shells (21, 22) characterised in that the two semi-shells include along the fold line (24) a region (25) of reduced thickness.

3. A sun-glare shield according to claim 2, characterised in that the semi-shells (21, 22) include openings or orifices (26) in the region (25) of reduced thickness.

4. A sun-glare shield according to any one of the claims 1 to 3, characterised in that the end part (36) has a thickness which is different from the thickness of the main part.

## Patentansprüche

1. Eingebauchte Sonnenblende, insbesondere für Kraftfahrzeuge, bestehend aus einer Armierung (1; 21, 22), einer Verkleidung (3; 23) in Form einer Bahn auf beiden Seiten, Mitteln (4), über die die Sonnenblende am Dach des Fahrzeuges angelenkt ist, einem eingebauchten Ende (9), das der Form des Daches angepasst ist, wobei die Einbauchung durch mindestens eine Biegelinie (7, 24) bewirkt wird, die die Sonnenblende in ein Hauptteil (8) und ein Endteil (9) teilt, das schräg relativ zu dem Hauptteil orientiert werden kann, und die Armierung (1; 21, 22) auf das Hauptteil (8) beschränkt ist und sich bis in die Nähe der Biegelinie (7, 24) erstreckt, dadurch gekennzeichnet, dass im Bereich der Biegelinie ein Verstärkungsorgan (10) angeordnet ist, das längs der Biegelinie Löcher (11) aufweist, und dass die Bahn (3a, 3b; 23a, 23b), die die beiden Seiten bedeckt, im Bereich der Löcher (11) zusammengeschweisst sind.

2. Sonnenblende nach Anspruch 1 mit zwei miteinander verbundenen Halb-Schalen (21, 22), dadurch gekennzeichnet, dass die beiden Halb-Schalen längs der Biegelinie (24) eine Zone (25) mit reduzierter Dicke aufweisen.

3. Sonnenblende nach Anspruch 2, dadurch gekennzeichnet, dass die Halb-Schalen (21, 22) Ausnehmungen oder Öffnungen (26) in der Zone (25) reduzierter Dicke aufweisen.

4. Sonnenblende nach Anspruch 1–3, dadurch gekennzeichnet, dass das Ende (36) eine Dicke hat, die sich von derjenigen des Hauptteils unterscheidet.

FIG.1

0 053 053

0 053 053

## FIG.2

## FIG.3

## FIG_4

## FIG_5